(19) Europäisches Patentamt
European Patent Office
Office européen des brevets

(11) **EP 4 694 439 A1**

(12) **EUROPEAN PATENT APPLICATION**
published in accordance with Art. 153(4) EPC

(43) Date of publication:
**11.02.2026 Bulletin 2026/07**

(21) Application number: **24806362.0**

(22) Date of filing: **29.04.2024**

(51) International Patent Classification (IPC):
*H04W 72/04* (2023.01)    *H04W 74/08* (2024.01)

(52) Cooperative Patent Classification (CPC):
**H04B 7/185; H04W 72/04; H04W 72/0446;**
**H04W 72/23; H04W 74/00; H04W 74/08;**
**H04W 74/0833**

(86) International application number:
**PCT/CN2024/090687**

(87) International publication number:
**WO 2024/235006 (21.11.2024 Gazette 2024/47)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **18.05.2023   CN 202310566459**

(71) Applicant: **Huawei Technologies Co., Ltd.**
**Shenzhen, Guangdong 518129 (CN)**

(72) Inventors:
• **QIAO, Yunfei**
  **Shenzhen, Guangdong 518129 (CN)**
• **WANG, Yu**
  **Shenzhen, Guangdong 518129 (CN)**
• **WANG, Xiaolu**
  **Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **COMMUNICATION METHOD AND APPARATUS**

(57)    Embodiments of this application pertain to the communication field, and provide a communication method and apparatus, to resolve a problem of random access collision. The method includes: An access network device groups users based on different grouping conditions, configures a corresponding random access window for each user group, where the random access window includes one or more random access resources, and configures, for a terminal device by using first information, time domain position information of the random access window and user grouping information corresponding to the random access window, so that the terminal device can determine a corresponding user group based on the user grouping information corresponding to the random access window, and initiate random access by using a random access resource in the random access window corresponding to the user group to which the terminal device belongs. This improves random access efficiency and reliability.

FIG. 5

## Description

This application claims priority to Chinese Patent Application No. 202310566459.7, filed with the China National Intellectual Property Administration on May 18, 2023 and entitled "COMMUNICATION METHOD AND APPARATUS", which is incorporated herein by reference in its entirety.

## TECHNICAL FIELD

Embodiments of this application relate to the communication field, and in particular, to a communication method and apparatus.

## BACKGROUND

In a new radio (new radio, NR) system, a network device may send a synchronization signal and physical broadcast channel (physical broadcast channel, PBCH) block (synchronization signal and PBCH block, SSB) on a plurality of beams in a beam sweeping manner. Correspondingly, after receiving a plurality of SSBs from the network device, a terminal device may select one SSB from the plurality of SSBs, and send a preamble (preamble) sequence based on a beam of the SSB to perform random access. Currently, a mapping relationship between an SSB and a random access channel occasion (RACH occasion, RO) of a physical random access channel (physical random access channel, PRACH) is specified. One SSB may establish a mapping relationship with one or more ROs. In addition, a mapping relationship between one SSB and one RO forms one PRACH configuration periodicity, and mapping relationships between all SSBs in one SSB burst set and ROs are in one RO association periodicity. Therefore, the network device determines, based on an uplink PRACH resource position (RO) selected by the terminal device, a beam for sending a downlink random access response (random access response, RAR).

In a satellite mobile communication scenario, to achieve large coverage, there may be hundreds or even thousands of beams of a single satellite. Because a coverage area of a satellite is large, user data and a quantity of access users vary greatly in different beam coverage areas. If the foregoing method for periodic SSB beam sweeping and fixed mapping between an SSB and an RO in the NR is used, efficiency of initial beam establishment in a non-terrestrial network (non-terrestrial network, NTN) scenario is reduced. Currently, to improve efficiency of initial beam establishment in NTN large-scale beams, an SSB beam sweeping periodicity and a mapping relationship between an SSB and an RO are dynamically configured. However, when a large quantity of user traffic bursts appear, an access collision may still exist in the dynamic configuration manner, causing random access congestion. Therefore, how to implement random access of a large quantity of users in the NTN scenario becomes an urgent problem to be resolved.

## SUMMARY

Embodiments of this application provide a communication method and apparatus, to alleviate a problem of user random access congestion in an NTN scenario, so as to implement random access of a large quantity of users.

To achieve the foregoing objective, this application uses the following technical solutions.

According to a first aspect, a communication method is provided. The method may be performed by an access network device. The access network device herein may be the access network device, or may be a processor, a module, a chip, or a chip system that is in the access network device and that implements the method. An example in which the method is performed by the access network device is used below for description. The communication method includes: The access network device generates first information, where the first information includes configuration information of one or more random access windows, configuration information of each random access window includes time domain position information of the random access window and user grouping information corresponding to the random access window, the user grouping information corresponding to the random access window indicates a grouping condition or a grouping threshold for a terminal device that performs random access in the random access window, and the random access window includes one or more random access resources; and the access network device sends the first information.

Based on the communication method, users are grouped based on different random access conditions (such as a position and a traffic type), a random access resource used by each user group is configured by using the random access window, the user group is associated with the random access window, and terminal devices in different user groups use random access resources in different random access windows. This can reduce a probability that a large quantity of terminal devices select random access resources in a same random access window, and reduce a random access collision, thereby improving random access efficiency and reliability.

In a possible design solution, the communication method provided in this embodiment of this application may further include: The access network device receives second information from a first terminal device, where the second information may include at least one of the following: position information of the first terminal device, capability information of the first terminal device, or a traffic feature of the first terminal device, and the second information is for determining the first information. Based on this design solution, the access network device may perform user grouping and configure random access resources corresponding to different user groups based on the second information reported by the terminal device, so that accuracy of the user grouping can be improved.

In a possible design solution, the communication method provided in this embodiment of this application may further include: The access network device sends first indication information, where the first indication information indicates that the one or more random access windows associated with a first area are activated, the first area meets an overload condition, and the overload condition is a condition for activating the one or more random access windows associated with the first area. Based on this design solution, the one or more random access windows preconfigured based on the first information is in an inactive state by default. When traffic overload or user overload does not occur in a coverage area of the access network device, a terminal device in the coverage area of the access network device may still perform random access based on an RO mapped to an existing SSB. When traffic overload or user overload occurs in a coverage area of the access network device, the access network device may activate, by using the first indication information, a random access window configured for an overload area, to alleviate random access pressure.

In a possible design solution, the communication method provided in this embodiment of this application may further include: The access network device receives second indication information from a core network device. The second indication information indicates that the first area meets the overload condition. Based on this design solution, the access network device may determine the overload area based on the second indication information sent by the core network device, to activate a random access window associated with the overload area, thereby improving random access efficiency. The core network device in this embodiment of this application may be an access and mobility management function (access and mobility management function, AMF) network element.

According to a second aspect, a communication method is provided. The method may be performed by a first terminal device. The first terminal device herein may be the first terminal device, or may be a processor, a module, a chip, or a chip system that is in the first terminal device and that implements the method. An example in which the method is performed by the first terminal device is used below for description. The communication method includes: The first terminal device receives first information from an access network device, where the first information includes configuration information of one or more random access windows, configuration information of each random access window includes time domain position information of the random access window and user grouping information corresponding to the random access window, the user grouping information corresponding to the random access window indicates a grouping condition or a grouping threshold for a terminal device that performs random access in the random access window, and the random access window includes one or more random access resources; and the first terminal device determines a first random access window based on the first information, where the first random access window is one of the one or more random access windows.

In a possible design solution, the communication method provided in this embodiment of this application may further include: The first terminal device sends second information to the access network device, where the second information may include at least one of the following: position information of the first terminal device, capability information of the first terminal device, or a traffic feature of the first terminal device, and the second information is for determining the first information.

In a possible design solution, before that the first terminal device initiates random access in the first random access window, the communication method provided in this embodiment of this application may further include: The first terminal device receives first indication information from the access network device, where the first indication information indicates that the one or more random access windows associated with a first area are activated, the first area meets an overload condition, and the overload condition is a condition for activating the one or more random access windows associated with the first area; and the first terminal device determines, based on the first indication information, that the first random access window is one of the one or more activated random access windows associated with the first area.

With reference to the first aspect or the second aspect, in a possible design solution, the overload condition may include at least one of the following: a quantity of random access requests of the terminal device in the first area exceeds a random access request threshold, a quantity of terminal devices in an active state in the first area exceeds a first threshold, or a quantity of terminal devices in an idle state in the first area exceeds a second threshold.

With reference to the first aspect or the second aspect, in a possible design solution, the second indication information may be carried in downlink control information (downlink control information, DCI) scrambled by a common (common) radio network temporary identifier (radio network temporary identifier, RNTI), a handover trigger command, or a conditional handover (conditional handover, CHO) configuration.

With reference to the first aspect or the second aspect, in a possible design solution, the random access window may be a segment of consecutive time-domain resources, and the time domain position information of the random access window may include at least one of the following: an index of the random access window, a start position of the random access window, a length of the random access window, or a periodicity of the random access window.

With reference to the first aspect or the second aspect, in a possible design solution, the random access window may include one or more discrete time-domain resources, and the time domain position information of the random access window includes an index of the random access window, and a start position and duration of each discrete time-domain resource.

With reference to the first aspect or the second aspect, in a possible design solution, the user grouping information may include at least one of the following: area information that needs to be met by the terminal device that performs random access in the random access window, a traffic type that needs to be met by the terminal device that performs random access in the random access window, a data packet size that needs to be met by the terminal device that performs random access in the random access window, or a data arrival probability that needs to be met by the terminal device that performs random access in the random access window.

According to a third aspect, a communication method is provided. The method may be performed by an access network device. The access network device herein may be the access network device, or may be a processor, a module, a chip, or a chip system that is in the access network device and that implements the method. An example in which the method is performed by the access network device is used below for description. The communication method includes: The access network device generates third information, where the third information includes configuration information of one or more user groups and configuration information of a first signal corresponding to each user group, the configuration information of the user group indicates a grouping condition or a grouping threshold for a terminal device in the user group, the configuration information of the first signal corresponding to the user group indicates the first signal that the terminal device in the user group needs to listen to, different user groups correspond to different first signals, the first signals corresponding to the different user groups are orthogonal to each other, and the first signal is used by the terminal device in the user group to determine a to-be-used random access resource; and the access network device sends the third information.

Based on the communication method, users are grouped based on different conditions, and one first signal is configured for each user group. Different user groups correspond to different first signals, so that terminal devices in the different user groups can listen to the corresponding first signals, and use a random access resource adjacent to the first signal as a resource for a terminal device in the user group to perform random access. This can reduce a probability that a large quantity of terminal devices select a same random access resource, and reduce a random access collision, thereby improving random access efficiency and reliability.

In a possible design solution, the communication method provided in this embodiment of this application may further include: The access network device sends a second signal on a resource after a first synchronization signal and physical broadcast channel block SSB. The second signal is one of first signals corresponding to the one or more user groups, and the first SSB is mapped to one or more random access resources. Based on this design solution, the access network device sends, on a resource after each SSB, a first signal corresponding to one user group, so that a terminal device in each user group initiates, based on a position of the first signal obtained through listening, random access by using a random access resource mapped to a corresponding SSB, thereby reducing a random access collision.

According to a fourth aspect, a communication method is provided. The method may be performed by a first terminal device. The first terminal device herein may be the first terminal device, or may be a processor, a module, a chip, or a chip system that is in the first terminal device and that implements the method. An example in which the method is performed by the first terminal device is used below for description. The communication method includes: The first terminal device receives third information from an access network device, where the third information includes configuration information of one or more user groups and configuration information of a first signal corresponding to each user group, the configuration information of the user group indicates a grouping condition or a grouping threshold for a terminal device in the user group, the configuration information of the first signal corresponding to the user group indicates the first signal that the terminal device in the user group needs to listen to, different user groups correspond to different first signals, the first signals corresponding to the different user groups are orthogonal to each other, and the first signal is used by the terminal device in the user group to determine a to-be-used random access resource; the first terminal device determines, based on the third information, a first signal corresponding to a first user group, where the first user group is a user group to which the first terminal device belongs; the first terminal device receives a second signal on a resource after a first synchronization signal and physical broadcast channel block SSB, where the second signal is one of first signals corresponding to the one or more user groups; and when the first terminal device determines that the second signal is the first signal corresponding to the first user group, the first terminal device initiates random access on a random access resource to which the first SSB is mapped.

With reference to the third aspect or the fourth aspect, in a possible design solution, the configuration information of the user group may include at least one of the following: area information that needs to be met by the terminal device in the user group, a traffic type that needs to be met by the terminal device in the user group, a data packet size that needs to be met by the terminal device in the user group, or a data arrival probability that needs to be met by the terminal device in the user group.

According to a fifth aspect, a communication apparatus is provided, configured to implement the foregoing methods. The communication apparatus may be the access network device in the first aspect, or an apparatus including the access network device, or an apparatus included in the access network device, for example, a chip. The communication apparatus includes a corresponding module, unit, or means (means) for implementing the method in the first aspect. The module, unit, or means may be implemented by hardware, software, or hardware executing corresponding software. The hardware or the software includes one or more modules or units corresponding to the foregoing functions.

In some possible designs, the communication apparatus includes a processing module and a transceiver module. The processing module is configured to generate first information. The first information includes configuration information of one or more random access windows, configuration information of each random access window includes time domain position information of the random access window and user grouping information corresponding to the random access window, the user grouping information corresponding to the random access window indicates a grouping condition or a grouping threshold for a terminal device that performs random access in the random access window, and the random access window includes one or more random access resources. The transceiver module is configured to send the first information. For more detailed descriptions of the communication apparatus, refer to descriptions of the related method in the first aspect.

According to a sixth aspect, a communication apparatus is provided, configured to implement the foregoing methods. The communication apparatus may be the first terminal device in the first aspect, an apparatus including the first terminal device, or an apparatus included in the first terminal device, for example, a chip. The communication apparatus includes a corresponding module, unit, or means (means) for implementing the method in the second aspect. The module, unit, or means may be implemented by hardware, software, or hardware executing corresponding software. The hardware or the software includes one or more modules or units corresponding to the foregoing functions.

In some possible designs, the communication apparatus includes a processing module and a transceiver module. The transceiver module is configured to receive first information from an access network device. The first information includes configuration information of one or more random access windows, configuration information of each random access window includes time domain position information of the random access window and user grouping information corresponding to the random access window, the user grouping information corresponding to the random access window indicates a grouping condition or a grouping threshold for a terminal device that performs random access in the random access window, and the random access window includes one or more random access resources. The processing module is configured to determine a first random access window based on the first information. The first random access window is one of the one or more random access windows. For more detailed descriptions of the communication apparatus, refer to descriptions of the related method in the second aspect.

According to a seventh aspect, a communication apparatus is provided, configured to implement the foregoing methods. The communication apparatus may be the access network device in the third aspect, or an apparatus including the access network device, or an apparatus included in the access network device, for example, a chip. The communication apparatus includes a corresponding module, unit, or means (means) for implementing the method in the third aspect. The module, unit, or means may be implemented by hardware, software, or hardware executing corresponding software. The hardware or the software includes one or more modules or units corresponding to the foregoing functions.

In some possible designs, the communication apparatus includes a processing module and a transceiver module. The processing module is configured to generate third information. The third information includes configuration information of one or more user groups and configuration information of a first signal corresponding to each user group, the configuration information of the user group indicates a grouping condition or a grouping threshold for a terminal device in the user group, the configuration information of the first signal corresponding to the user group indicates the first signal that the terminal device in the user group needs to listen to, different user groups correspond to different first signals, the first signals corresponding to the different user groups are orthogonal to each other, and the first signal is used by the terminal device in the user group to determine a to-be-used random access resource. The transceiver module is configured to send the third information.

According to an eighth aspect, a communication apparatus is provided, configured to implement the foregoing methods. The communication apparatus may be the first terminal device in the fourth aspect, an apparatus including the first terminal device, or an apparatus included in the first terminal device, for example, a chip. The communication apparatus includes a corresponding module, unit, or means (means) for implementing the method in the fourth aspect. The module, unit, or means may be implemented by hardware, software, or hardware executing corresponding software. The hardware or the software includes one or more modules or units corresponding to the foregoing functions.

In some possible designs, the communication apparatus includes a processing module and a transceiver module. The transceiver module is configured to receive third information from an access network device. The third information includes configuration information of one or more user groups and configuration information of a first signal corresponding to each user group, the configuration information of the user group indicates a grouping condition or a grouping threshold for a terminal device in the user group, the configuration information of the first signal corresponding to the user group indicates the first signal that the terminal device in the user group needs to listen to, different user groups correspond to different first signals, the first signals corresponding to the different user groups are orthogonal to each other, and the first signal is used by the terminal device in the user group to determine a to-be-used random access resource. The processing module is configured to determine, based on the third information, a first signal corresponding to a first user group, where the first user group is a user group to which the first terminal device belongs. The transceiver module is further configured to receive a second signal on a resource after a first synchronization signal and physical broadcast channel block SSB, where the second signal is one of first signals corresponding to the one or more user groups. The processing module is further configured to: when it is determined that the second signal is the first signal corresponding to the first user group, initiate random access on a random access resource to which the first SSB is mapped. For more detailed descriptions of the communication apparatus, refer to descriptions of the related method in the fourth aspect.

With reference to any one of the fifth aspect to the eighth aspect, in a possible design solution, the transceiver module may include a receiving module and a sending module. The sending module is configured to implement a sending function of the communication apparatus according to any one of the fifth aspect to the eighth aspect, and the receiving module is configured to implement a receiving function of the communication apparatus according to any one of the fifth aspect to the eighth aspect.

With reference to any one of the fifth aspect to the eighth aspect, in a possible design solution, the communication apparatus according to any one of the fifth aspect to the eighth aspect may further include a storage module, and the storage module stores a program or instructions. When the processing module executes the program or the instructions, the communication apparatus according to any one of the fifth aspect to the eighth aspect can perform the communication method according to any one of the first aspect to the fourth aspect.

According to a ninth aspect, a communication apparatus is provided (for example, the communication apparatus may be a chip or a chip system). The communication apparatus includes a processor, configured to implement functions in any one of the foregoing aspects.

In a possible design solution, the communication apparatus may further include a memory, and the memory is configured to store necessary program instructions and data. The processor is coupled to the memory, and the processor is configured to execute a computer program or instructions stored in the memory, so that the communication apparatus performs the method according to any one of the possible implementations of the first aspect to the fourth aspect.

In a possible design solution, the communication apparatus according to the ninth aspect may further include a transceiver. The transceiver may be a transceiver circuit or an interface circuit. The transceiver may be used by the communication apparatus according to the ninth aspect to communicate with another communication apparatus.

In a possible design solution, the processor may be integrated with the memory.

In some possible designs, when the apparatus is a chip system, the apparatus may include a chip, or may include a chip and another discrete component.

According to a tenth aspect, this application provides a communication apparatus. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to any one of the possible implementations of the first aspect to the fourth aspect by using a logic circuit or by executing code instructions.

It may be understood that when the communication apparatus provided in any one of the ninth aspect or the tenth aspect is a chip, the foregoing sending action/function may be understood as an output, and the foregoing receiving action/function may be understood as an input.

According to an eleventh aspect, a computer-readable storage medium is provided. The computer-readable storage medium stores a computer program or instructions. When the computer program or the instructions are run on a communication apparatus, the communication apparatus is enabled to perform the method according to any one of the first aspect to the fourth aspect.

According to a twelfth aspect, a computer program product including instructions is provided. When the computer program product is run on a communication apparatus, the communication apparatus is enabled to perform the method according to any one of the first aspect to the fourth aspect.

According to a thirteenth aspect, a communication system is provided, including an access network device configured to implement the method in the first aspect and a terminal device configured to implement the method in the second aspect, or including an access network device configured to implement the method in the third aspect and a terminal device configured to implement the method in the fourth aspect.

## BRIEF DESCRIPTION OF DRAWINGS

FIG. 1 is a diagram of a structure of SSB transmission according to an embodiment of this application;
FIG. 2 is a diagram of an association periodicity of an SSB and an RO according to an embodiment of this application;
FIG. 3 is a diagram of a structure of another SSB transmission according to an embodiment of this application;

FIG. 4 is a diagram of an architecture of a communication system according to an embodiment of this application;

FIG. 5 is a schematic flowchart of a communication method according to an embodiment of this application;

FIG. 6 is a diagram of a structure of a random access window according to an embodiment of this application;

FIG. 7 is a diagram of a structure of another random access window according to an embodiment of this application;

FIG. 8 is a schematic flowchart of another communication method according to an embodiment of this application;

FIG. 9 is a diagram of a scenario of performing random access based on a first signal according to an embodiment of this application;

FIG. 10 is a diagram of a structure of a communication apparatus according to an embodiment of this application; and

FIG. 11 is a diagram of a structure of another communication apparatus according to an embodiment of this application.

## DESCRIPTION OF EMBODIMENTS

To better understand embodiments of this application, the following several items are described before embodiments of this application.

First, in embodiments of this application, "indicate" may include "directly indicate" and "indirectly indicate". When a piece of "indication information" is described as indicating A, the indication information may directly indicate A or indirectly indicate A, but it does not indicate that the indication information definitely carries A.

Information indicated by indication information is referred to as to-be-indicated information. During specific implementation, the to-be-indicated information is indicated in a plurality of manners, for example, but not limited to, the following manners: The to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, a common part of all pieces of information may be identified and indicated in a unified manner, to reduce indication overheads caused by separately indicating same information.

Furthermore, specific indication manners may alternatively be various existing indication manners, for example, but not limited to, the foregoing indication manners and various combinations thereof. For details of the various indication manners, refer to a conventional technology. The details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

The to-be-indicated information may be sent as a whole, or may be separately sent in a form of a plurality of pieces of sub-information. Sending periodicities and/or sending occasions of these pieces of sub-information may be identical or different. A specific sending method is not limited in this application. The sending periodicities and/or the sending occasions of these pieces of sub-information may be predefined, for example, predefined according to a protocol, or may be configured by a transmitting end device by sending configuration information to a receiving end device. The configuration information may include, for example, but not limited to one or a combination of at least two of radio resource control (radio resource control, RRC) signaling, medium access control (medium access control, MAC) layer signaling, and physical layer signaling. The MAC layer signaling includes, for example, a MAC-control element (control element, CE), and the physical (physical, PHY) layer signaling includes, for example, DCI.

Second, numbers such as first and second in embodiments of this application are merely for differentiation for ease of description, and are not intended to limit the scope of embodiments of this application, for example, for distinguishing between different indication information. For another example, a first network area and a second network area are merely intended to distinguish between different areas, and are not intended to limit a sequence thereof. A person skilled in the art may understand that the terms such as "first" and "second" do not limit a quantity or an execution sequence, and the terms such as "first" and "second" do not indicate a definite difference.

Third, in embodiments of this application, descriptions such as "when", "in a case", and "if" mean that a device (for example, a terminal device or a network device) performs corresponding processing in an objective situation, and are not intended to limit time, and the device (for example, the terminal device or the network device) is not required to perform a determining action during implementation; and do not mean any other limitation.

Fourth, in embodiments of this application, terms such as "example" or "for example" are used to represent giving an example, an illustration, or a description. Any embodiment or design solution described as an "example" or "for example" in embodiments of this application should not be explained as being more preferred or having more advantages than another embodiment or design solution. Exactly, use of the terms such as "example" or "for example" is intended to present a related concept in a specific manner for ease of understanding.

Fifth, in embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items" or a similar expression thereof means any combination of these items, including a singular item (piece) or any combination of a plural items (pieces). For example, at least one item (piece) of a, b, or c may represent a, b, c, a and b, a and c, b and c, or a, b, and c, where a, b, and c may be singular or plural.

To better understand embodiments of this application, the following first describes related technologies in embodiments of this application.

A PRACH is a channel used by a terminal device to send a random access-related signal, and a PRACH sequence is a random access signal-related sequence. In embodiments of this application, the PRACH sequence is a preamble sequence. In an NR system, a network device may send an SSB on a plurality of beams in a beam sweeping manner. Random access can be initiated only after a beam sweeping signal of the SSB covers the terminal device, downlink synchronization is performed, and PRACH-related information is obtained. For example, the SSB needs to establish an association relationship with an RO, and the network device determines, based on an uplink PRACH resource position of the terminal device, a beam for sending a downlink RAR.

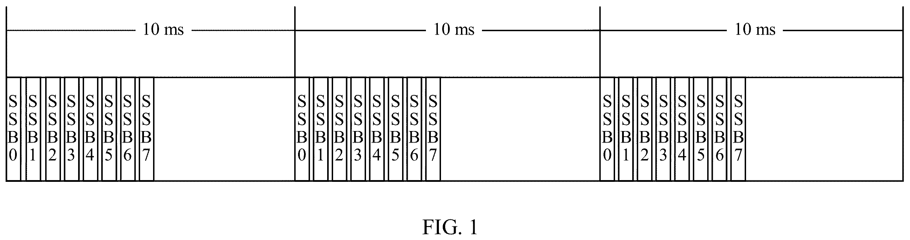

SSBs required for completing one beam sweeping form an SSB burst set (SSB burst set), where the SSB burst set is periodically transmitted. Each SSB in an SSB burst set in a beam sweeping periodicity corresponds to one beam direction, and beam directions of all SSBs in the SSB burst set cover an entire cell. In the NR system, an SSB burst set is limited to a half-frame of 5 milliseconds (millisecond, ms), and is transmitted starting from a 1st slot of the half-frame. An SSB beam sweeping periodicity in the NR can be set to 5 ms, 10 ms, 20 ms, 40 ms, 80 ms, or 160 ms. For example, FIG. 1 is a diagram of a structure of periodic transmission of an SSB burst set. As shown in FIG. 1, an SSB burst set includes eight SSBs (SSB 0 to SSB 7), a beam sweeping periodicity of the SSB burst set is 10 ms (one radio frame), and the SSB burst set is sent in a first half-frame of the radio frame.

A random access process includes a contention-based random access process and a non-contention-based random access process. One RO can be allocated a maximum of 64 random access preambles, which are allocated to a terminal device for random access. In the contention-based random access process, a preamble index used for random access is randomly selected by the terminal device. In the non-contention-based random access process, a preamble index used for random access is indicated by the network device. A value range of the preamble index is associated with an SSB index, and the SSB index is associated with the RO. There are a plurality of sending moments for the PRACH in time domain and frequency domain. A mapping relationship needs to be established between each SSB and a PRACH sending moment (RO). An RO for sending a preamble may be an RO selected from one or more ROs corresponding to the SSB, and the RO may be a time-frequency resource used by the terminal device to perform random access.

Currently, a mapping (or association) relationship between the SSB and the RO is specified. The mapping relationship between the SSB and the RO is configured by the network device by using a higher layer parameter. The higher layer parameter mainly includes "msg1-FDM" and "ssb-perRACH-OccasionAndCB-PreamblesPerSSB". The parameter msg1-FDM mainly defines a quantity of ROs on a frequency-domain resource. For example, there are P ROs, where P is an integer greater than or equal to 1, for example, {1, 2, 4, 8}. The parameter ssb-perRACH-OccasionAndCB-PreamblesPerSSB mainly defines: N SSBs are mapped (or may be considered as being associated) to one RO, and R preambles are mapped to one SSB. For example, when N is less than 1, one SSB is mapped to 1/N ROs, and when N is greater than 1, N SSBs are mapped to one RO (or it may be considered that one SSB is mapped to 1/N ROs). For example, when N=1/2, one SSB is mapped to two ROs, and when N=2, two SSBs are mapped to one RO. In other words, one SSB may be mapped to one or more ROs, and one RO may alternatively be mapped to one or more SSBs. Each SSB is mapped to R consecutive preambles on an RO to which the SSB is mapped. If a plurality of SSBs are mapped to one RO, a start index (sequence number) of a preamble associated with each SSB is $\mathrm{n} * N_{preamble}^{total}/\mathrm{N}$, where n is a relative sequence number of the SSB in the plurality of SSBs sent by the network device, and $N_{preamble}^{total}$ is a maximum quantity of preambles multiplexed on each RO. The SSB is mapped to the RO in the following order: The SSB is first mapped in ascending order of preamble sequence numbers in one RO, then mapped in ascending order of frequency-domain resource indexes of at least one RO in frequency domain multiplexing, then mapped in ascending order of time-domain resource indexes of at least one RO in time division multiplexing in one PRACH slot; and finally, mapped in ascending order of PRACH slot indexes.

Specific association time is needed to associate the SSB index with the RO. A concept of an association periodicity is introduced herein. To be specific, the association periodicity indicates a specific quantity of PRACH configuration periodicities that are needed in time domain for associating all SSB indexes with the RO, where the PRACH configuration periodicity is a periodicity for configuring the RO.

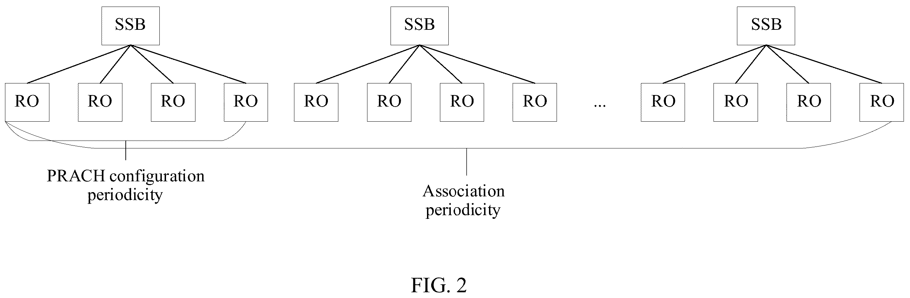

When one SSB corresponds to a plurality of ROs, a relationship between the association periodicity and the PRACH configuration periodicity is: $T = [m * r/R] * t$, where T represents the association periodicity, t represents the PRACH configuration periodicity, m represents a quantity of SSBs, r represents a quantity of ROs corresponding to one SSB, and R represents a quantity of ROs included in one PRACH configuration periodicity. FIG. 2 is a diagram of an association periodicity of an SSB and an RO according to an embodiment of this application. As shown in FIG. 2, one SSB is mapped to four ROs, and the four ROs form one PRACH configuration periodicity. In this case, association periodicity=PRACH configuration periodicity* quantity of SSBs.

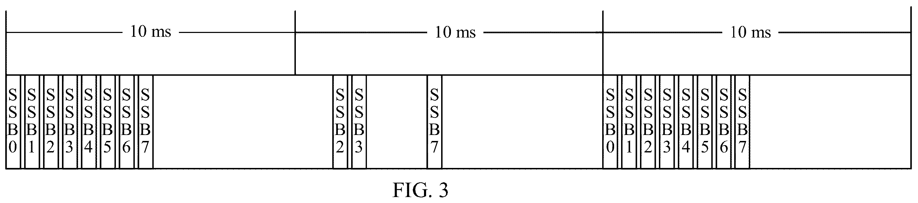

In a current satellite mobile communication scenario, to achieve large coverage, there may be hundreds or even thousands of beams of a single satellite. If the foregoing method for periodic SSB beam sweeping and fixed mapping between an SSB and an RO in the NR is used, because a satellite has a large coverage area, user data and a quantity of access users vary greatly in different beam coverage areas. Therefore, efficiency of initial beam establishment in an NTN scenario is reduced. Currently, a related optimization solution is disclosed. When services are uneven, PRACH resources can be dynamically adjusted, to improve efficiency of initial beam establishment in NTN large-scale beams, thereby improving system capacity. As shown in FIG. 3, the SSB beam sweeping periodicity and the mapping relationship between the SSB and the RO are dynamically configured. When there are few services, sending of the SSB and a quantity of ROs to which the SSB is mapped can be reduced. When there are many services, sending of the SSB and a quantity of ROs to which the SSB is mapped can be increased.

However, when a large quantity of user traffic bursts appear, in the foregoing dynamic configuration manner, because a quantity of ROs to which some SSBs are mapped is small, an access collision may still exist, causing random access congestion. Therefore, in the NTN scenario and another random access scenario, how to implement random access of a large quantity of users becomes an urgent problem to be resolved.

The following first describes an architecture of a system in embodiments of this application.

All aspects, embodiments, or features are presented in embodiments of this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

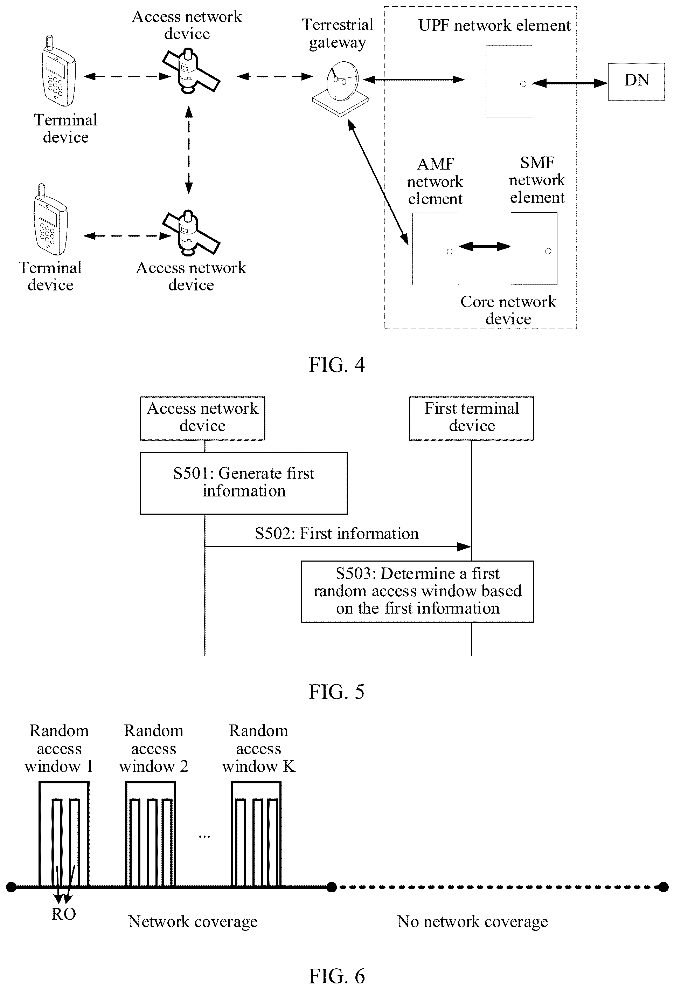

FIG. 4 is a diagram of an architecture of a communication system to which an embodiment of this application is applied. As shown in FIG. 4, the communication system includes an access network device and a plurality of terminal devices that communicate with the access network device. Optionally, the communication system may further include a core network device that communicates with the access network device.

The communication system shown in FIG. 4 may be applied to a current long term evolution (long term evolution, LTE) system or a long term evolution advanced (LTE advanced, LTE-A) system, or may be applied to a 5th generation mobile communication technology (5th generation, 5G) network that is currently being formulated or another future network. Certainly, the communication system may be further applied to a system in which the LTE and 5G hybrid networking is used, or a device-to-device (device-to-device, D2D) communication system, or a machine to machine (machine to machine, M2M) communication system, an Internet of things (Internet of Things, IoT) communication system, an Internet of Vehicles communication system, or another system. This is not specifically limited in this embodiment of this application. In different networks, the core network device, the access network device, and the terminal device in the foregoing communication system may correspond to different names. A person skilled in the art may understand that the names do not constitute a limitation on the devices.

The core network device referred to in this embodiment of this application is an apparatus that is deployed in a core network and that is configured to provide a service for the terminal device. In systems using different radio access technologies, core network devices having a similar wireless communication function may have different names. For example, the communication method in embodiments of this application is applied to a 5G system, and the core network device may be an AMF network element, a session management function (session management function, SMF) network element, a user plane function (user plane function, UPF) network element, or the like. The UPF network element processes user plane data. The AMF network element and the SMF network element process control plane signaling. A precoding method in embodiments of this application is applied to an LTE system, and a core network device may be a mobility management entity (mobility management entity, MME). For ease of description only, in embodiments of this application, the foregoing apparatuses that can provide a service for the terminal device are collectively referred to as a core network device.

The access network device is an apparatus that is deployed in a radio access network and that is configured to provide a wireless communication function. Optionally, the access network device in embodiments of this application may include but is not limited to the following forms: a macro base station, a micro base station (also referred to as a small cell), a relay station, a transmission reception point (transmission reception point, TRP), a next generation network node (g NodeB, gNB), an evolved NodeB (ng evolved NodeB, ng-eNB) connected to a next generation core network, and the like, and may further include a radio access network device that is not in a 3<sup>rd</sup> generation partnership project (3<sup>rd</sup> generation partnership project, 3GPP) system like a wireless local area network (wireless local area network, WLAN) access device. As noted above, all or some of functional modules of the access network device may be deployed on an air-borne platform or a satellite, or may be deployed in another form of communication device in a high altitude. Correspondingly, the access network device may be an air-borne platform, a satellite, or another similar device that accesses the terminal device to the core network device. The air-borne platform may include at least one of the following: a satellite, an uncrewed aerial vehicle, or a hot air balloon.

The terminal device, also referred to as a terminal apparatus, user equipment (user equipment, UE), a mobile station (mobile station, MS), a mobile terminal (mobile terminal, MT), or the like, is a device that provides a voice/data connectivity for a user, for example, a handheld device or a vehicle-mounted device having a wireless connection function. The terminal device may be specifically a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a terminal device in a future 5G communication network or a communication network after 5G, or the like. This is not limited in embodiments of this application.

In the system architecture shown in FIG. 4, the system further includes a terrestrial gateway and a data network (data network, DN). An interface for communication between the terminal device and the access network device may be an air interface (air interface). An interface used by the access network device to communicate with the terrestrial gateway may be an NG interface. An interface used by the terrestrial gateway to communicate with the core network device may be an NG interface. The core network device may be connected to only one terrestrial gateway. In this case, the access network device may be connected to the core network device through one terrestrial gateway. Details are shown in FIG. 4. The core network device may be connected to more than one terrestrial gateway. In this case, the access network device may be connected to the core network device through any one of the more than one terrestrial gateway (not shown in FIG. 4). The core network device (for example, the UPF network element) may communicate with an entity, a network element, or the like in the DN through an interface (for example, an N6 interface).

It should be noted that only manners of communication between some network elements are listed above, and other network elements may alternatively communicate with each other in some connection manners. Details are not described herein in this embodiment of this application.

The system architecture and a service scenario described in embodiments of this application are intended to describe the technical solutions in embodiments of this application more clearly, and do not constitute a limitation on the technical solutions provided in embodiments of this application. A person of ordinary skill in the art may learn that the technical solutions provided in embodiments of this application are also applicable to a similar technical problem as a network architecture evolves and a new service scenario emerges.

With reference to FIG. 5 to FIG. 9, the following describes in detail the communication method provided in embodiments of this application.

For example, FIG. 5 is a schematic flowchart of a communication method according to an embodiment of this application. The communication method is applicable to communication between the access network device and the terminal device shown in FIG. 4.

As shown in FIG. 5, the communication method includes the following steps.

S501: An access network device generates first information.

In this embodiment of this application, the first information indicates a random access resource used by a terminal device in a coverage area of the access network device to perform random access, the first information includes configuration information of one or more random access windows, and configuration information of each random access window includes time domain position information of the random access window and user grouping information corresponding to the random access window. The time domain position information of the random access window indicates a time domain position of the random access window. The user grouping information corresponding to the random access window indicates a grouping condition or a grouping threshold for the terminal device that performs random access in the random access window. Each random access window includes one or more random access resources, and quantities of random access resources in different random access windows may be different or may be the same. This is not specifically limited herein.

It should be understood that the random access resource is a time-frequency resource, and different random access resources do not overlap each other. For example, the random access resource may be an RO. Optionally, the configuration information of the random access window may further include frequency domain position information of the random access window.

In a possible design solution, the random access window may be a segment of consecutive time-domain resources. For example, FIG. 6 is a diagram of a structure of a random access window according to an embodiment of this application. As shown in FIG. 6, an example in which a random access resource is an RO is used. Random access windows 1 to K (where K is a positive integer) are a segment of consecutive time-domain resources in time domain, and there are a plurality of ROs in each random access window. For example, there are two ROs in a random access window 1, and there are three ROs in a random access window 2.

In this scenario, the time domain position information of the random access window may include at least one of the following: an index of the random access window, a start position of the random access window, a length of the random access window, or a periodicity of the random access window. The index of the random access window (window index) indicates a sequence number of the random access window in a plurality of configured random access windows. For example, the quantity of configured random access windows is K, and indexes of the K random access windows may be represented as 1 to K or 0 to K-1. As shown in FIG. 6, the indexes of the K random access windows are sequentially 1 to K. The start position of the random access window indicates a start position of the random access window in time domain. For example, the start position of the random access window may be represented by an offset of the start position of the random access window relative to a $1^{st}$ frame, a $1^{st}$ slot, or a $1^{st}$ symbol in which the random access window is located. The length of the random access window represents a width occupied by the random access window in time domain. The periodicity of the random access window represents a size of a repetition periodicity of the random access window.

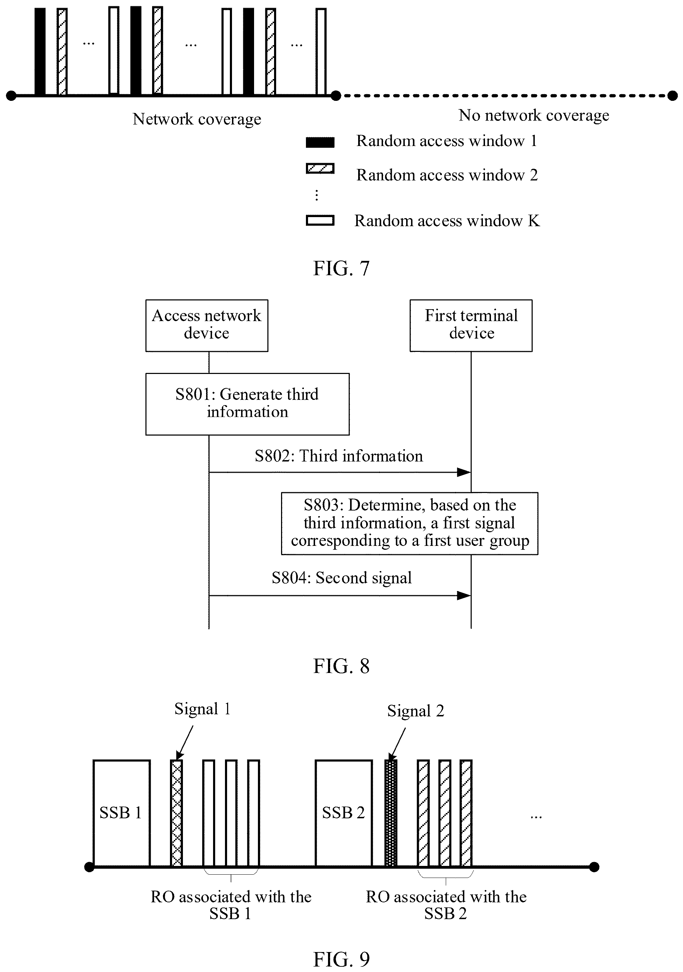

In another possible design solution, the random access window may include one or more discrete time-domain resources. FIG. 7 is a diagram of a structure of another random access window according to an embodiment of this application. K configured random access windows are discretely distributed in time domain, and one random access window includes a plurality of discrete time-domain resources. In a possible case, each discrete time-domain resource may be a time-domain resource occupied by one RO.

In this scenario, the time domain position information of the random access window may include an index of the random access window, and a start position and duration of each discrete time-domain resource. The start position of each discrete time-domain resource may also be represented by an offset of the start position of the discrete time-domain resource relative to a $1^{st}$ frame, a $1^{st}$ slot, or a $1^{st}$ symbol in which the discrete time-domain resource is located, and the duration represents a width occupied by the discrete time-domain resource in time domain.

Each configured random access window is associated with a corresponding user group. In other words, random access resources in different random access windows are used by terminal devices in different user groups. One user group may be associated with one or more random access windows, and the terminal devices in the different user groups need to meet different grouping conditions or grouping thresholds. In this embodiment of this application, the user grouping information corresponding to the random access window may include at least one of the following: area information that needs to be met by the terminal device that performs random access in the random access window, a traffic type that needs to be met by the terminal device that performs random access in the random access window, a data packet size that needs to be met by the terminal device that performs random access in the random access window, or a data arrival probability that needs to be met by the terminal device that performs random access in the random access window.

It should be understood that the user grouping information corresponding to the random access window may be configured in a form of a grouping condition. For example, a size of a data packet sent by the terminal device that performs random access in the random access window is configured as "threshold 1≤PacketSize<threshold 2", or may be configured in a form of a grouping threshold. For example, a size of a data packet sent by the terminal device that performs random access in the random access window is configured as "{threshold 1, threshold 2}".

The area information that needs to be met by the terminal device that performs random access in the random access window indicates that a position of the terminal device needs to be in a specified area range. The area information may be represented by a geographical area enclosed by several coordinates, may be represented by a center coordinate and a radius, or may be represented in another manner. This is not specifically limited in this embodiment of this application. The traffic type that needs to be met by the terminal device that performs random access in the random access window indicates that a type of a service executed by the terminal device needs to be a specified traffic type. The data packet size that needs to be met by the terminal device that performs random access in the random access window indicates that a size of a data packet sent by the terminal device needs to be in a threshold range. The data arrival probability that needs to be met by the terminal device that performs random access in the random access window indicates that an arrival probability of data sent by the terminal device needs to meet a threshold range. It should be understood that terminal devices in different user groups meet different grouping conditions or grouping thresholds. In a scenario in which one user group corresponds to a plurality of random access windows, the plurality of random access windows corresponding to the user group correspond to same user grouping information.

For example, K=4, that is, a quantity of random access windows is 4 (random access windows 1 to 4), where the random access windows 1 and 4 correspond to a same user group, and the random access windows 1 and 4 correspond to a user group 1. User grouping information corresponding to the random access window 1 or the random access window 4 includes that a terminal device that performs random access in the random access window 1 or 4 needs to be located in a first area, a size of a data packet sent by the terminal device that performs random access in the random access window 1 or 4 ranges from 0 bits to 20 bits (bit), and a data arrival probability of the terminal device that performs random access in the random access window 1 or 4 ranges from 50% to 70%. The random access window 2 corresponds to a user group 2, user grouping information corresponding to the random access window 2 includes that a terminal device that performs random access in the random access window needs to be located in a second area, a size of a data packet sent by the terminal device that performs random access in the random access window 2 ranges from 21 bits to 50 bits (bit), and a data arrival probability of the terminal device that performs random access in the random access window 2 ranges from 71% to 80%. The random access window 3 corresponds to a user group 3, user grouping information corresponding to the random access window 3 includes that a terminal device that performs random access in the random access window needs to be located in a third area, a size of a data packet sent by the terminal device that performs random access in the random access window 3 ranges from 51 bits to 70 bits (bit), and a data arrival probability of the terminal device that performs random access in the random access window 3 ranges from 81% to 100%.

It should be understood that the foregoing example shows several user grouping conditions. In addition to the foregoing grouping conditions, another grouping condition that can be used to implement user grouping may be further included, for example, a user type/a computing capability that needs to be met by the terminal device that performs random access in the random access window. This is not limited in this embodiment of this application. In addition, for different user groups, corresponding indexes (for example, group index) may also be configured.

In a possible case, one or more random access windows corresponding to each user group may be used as one random access window group. Each random access window group corresponds to a group identifier (for example, a window group ID) or an index (for example, a window group index). An index of a random access window in each random access window group may be numbered from a start sequence number (for example, 0 or 1). In this case, the index of the random access window indicates a sequence number of the random access window in the random access window group. Each random access window may correspond to an index of a random access window group and an index of the random access window. In other words, configuration information of each random access window may further include an index of a random access window group to which each random access window belongs. In this case, user grouping information corresponding to the random access window in the first information is user grouping information corresponding to the random access window group.

In this embodiment of this application, the random access window and the user group may be configured based on context information of the terminal device in the coverage area of the access network device. In a possible design solution, the access network device may further configure a quantity of random access windows and a user group based on information such as a capability and a position that are reported by the terminal device in real time. For example, the access network device receives second information from a first terminal device, to determine the first information based on the second information. The first terminal device is a terminal device that is in the coverage area of the access network device and that needs to initiate random access, and the second information may include at least one of the following: position information of the first terminal device, capability information of the first terminal device, or a traffic feature of the first terminal device. The capability information of the first terminal device may include a hardware capability of the first terminal device, for example, transmit power. The access network device may allocate terminal devices with similar transmit power to a same user group. The traffic feature of the first terminal device may include a size of a data packet that can be sent by the first terminal device, a data arrival probability, and the like. Correspondingly, the access network device may group users based on the data packet size and the data arrival probability, and configure a corresponding random access window.

S502: The access network device sends the first information to the first terminal device. Correspondingly, the first terminal device receives the first information from the access network device.

In this embodiment of this application, the access network device may broadcast the first information to the terminal device in the coverage area of the access network device.

In a possible design solution, the configuration information of the random access window and the user grouping information corresponding to the random access window that are in the first information may also be separately sent, for example, carried in different messages or signaling for sending.

S503: The first terminal device determines a first random access window based on the first information.

The first random access window is one of the one or more random access windows. In this embodiment of this application, after obtaining the first information, the first terminal device may determine, based on the position information, the traffic feature, and the like of the first terminal device, a user group to which the first terminal device belongs, and a random access window associated with the user group to which the first terminal device belongs, that is, the first random access window, so that the first terminal device may select a random access resource in the first random access window to initiate random access.

An example in which the quantity of random access windows is 4 (that is, K=4) is used, the first terminal device is located in the first area, a size of a data packet sent by the first terminal device is 10 bits, and a data arrival probability is 65%. Therefore, after obtaining the first information, the first terminal device matches information such as the position information and the traffic feature of the first terminal device with the user grouping information corresponding to the random access window in the first information, to determine that the first terminal device belongs to the user group 1, and may determine, based on a correspondence between the user group 1 and the random access window, that random access windows that can be used by the first terminal device are the random access windows 1 and 4. Further, the first terminal device selects a random access window from the random access window 1 and the random access window 4 as the first random access window, and initiates random access on the random access resource in the first random access window.

The random access window configured by the access network device may be configured to be in an active state or an inactive state by default. When the active state is configured by default, after obtaining the first information, the first terminal device may directly initiate random access in the random access window associated with the user group to which the first terminal device belongs.

In a scenario in which the inactive state is configured by default, after obtaining the first information, if the first terminal device intends to initiate random access by using the configured random access window, the access network device needs to activate the random access window and notify the first terminal device of the random access window, so that the first terminal device can perform random access in the activated random access window.

In a possible case, when determining whether the random access window needs to be activated, the access network device needs to determine whether one or more areas (for example, the first area) in the coverage area of the access network device meet an overload condition. If the first area meets the overload condition, the access network device may activate one or more random access windows that are associated with the first area and that are in one or more preconfigured random access windows, and indicate the one or more random access windows to the terminal device. For example, the access network device sends first indication information, where the first indication information indicates that the one or more random access windows associated with the first area are activated, the first area meets the overload condition, and the overload condition is a condition for indicating to activate the one or more random access windows associated with the first area. The overload condition may include at least one of the following: a quantity of random access requests of the terminal device in the first area exceeds a random access request threshold, a quantity of terminal devices in an active state in the first area exceeds a first threshold, or a quantity of terminal devices in an idle state in the first area exceeds a second threshold. In this embodiment of this application, the terminal device in the active state may be a terminal device in an RRC connected (connected) state or an RRC active (active) state, and the terminal device in the idle state may be a terminal device in an RRC idle (idle) state or an RRC inactive (inactive) state. In this scenario, after determining the first random access window based on the first information, the first terminal device needs to determine, based on the first indication information, that the first random access window is activated, that is, the first random access window is one of the one or more activated random access windows associated with the first area, and then initiates random access in the first random access window in the active state.

In this embodiment of this application, the first indication information may indicate, in a form of a single bit, that a random access window is activated. The random access window 1 is used as an example, 0 indicates that the random access window 1 is not activated, and 1 indicates that the random access window 1 is activated. When a plurality of random access windows are activated, a plurality of pieces of indication information may be used for indication. The first indication information may alternatively indicate, in a form of a bitmap (bitmap), that one or more random access windows are activated. This is not specifically limited herein. For example, if there are M random access windows associated with the first area, and M is a positive integer greater than 1, the first indication information may use a bitmap whose length is M to indicate that one or more of the M random access windows are activated, where a bit position corresponding to an activated random access window is 1, and a bit position corresponding to a deactivated random access window is 0.

In a possible design solution, the first indication information may be carried in the first information for sending, or may be sent separately from the first information. This is not specifically limited in this embodiment of this application.

In a possible case, the access network device may trigger, based on a physical downlink control channel (physical downlink control channel, PDCCH)-Order, the user to obtain the activated random access window. Therefore, the first indication information may be carried in DCI scrambled by a common (common) RNTI. The common RNTI may be a preconfigured common parameter.

In another possible case, in a cell handover or a CHO scenario, if the terminal device meets a handover condition, the access network device may include the first indication information in a handover trigger command (for example, RRC reconfiguration) or a CHO configuration, so that the terminal device can perform random access in a timely manner after completing handover.

In addition, whether one or more areas (for example, the first area) in the coverage area of the access network device meet the overload condition may be determined by the access network device, or may be indicated by a core network device to the access network device. In a possible design solution, the core network device sends second indication information to the access network device, and correspondingly, the access network device may receive the second indication information from the core network device. The second indication information indicates that the first area meets the overload condition, and the core network device may be an AMF network element. For example, the second indication information may be carried in a newly added protocol for NG interface (protocol for NG interface, NGAP) message (for example, an overload indicator message overload indicator), and delivered through the NG interface. Table 1 shows an information element (information element, IE) type that may be carried in the overload indicator message. An area information IE may indicate an overloaded area, a device type IE may indicate a type of a traffic-overloaded terminal device, like an IoT-type terminal device, a handheld device, or a very small aperture terminal (very small aperture terminal, VSAT), and a traffic type IE indicates an overloaded traffic type, like periodic traffic or aperiodic traffic. The second indication information may indicate an overload status of a specific device type of a specific traffic type in specific area information. When a plurality of areas are overloaded, the overload indicator message may include a plurality of groups of indication information.

Table 1

| Information element/Group name | Presence | Information element type and reference |
|---|---|---|
| Area information (Area info) | M | Ellipsoid point list |
| Device type (Device type) | O | Enumeration (internet of things IoT, handheld device Handheld, very small aperture terminal VSAT, and the like) |
| Traffic type (Traffic type) | O | Enumeration (periodic and aperiodic) |
| Overload threshold (Threshold_Overload) | O | Integer |

In a possible design solution, the first information may not include the user grouping information corresponding to the random access window. In this case, the first terminal device may determine an index of the first random access window based on an identifier (identifier, ID) of the first terminal device, to initiate random access on the random access resource in the first random access window. The identifier of the first terminal device may be a cell radio network temporary identifier (cell radio network temporary identifier, C-RNTI) or a temporary mobile subscriber identity (temporary mobile subscriber identity, TMSI). For example, the index of the first random access window and the identifier of the first terminal device meet the following relationship: $W_{index} = ID_{UE} \bmod W_{num}$, where $W_{index}$ is the index of the first random access window, $ID_{UE}$ is the identifier of the first terminal device, and $W_{num}$ is a total quantity of configured random access windows.

Based on the foregoing design solution, the first information includes the user grouping information corresponding to the random access window. In a scenario in which random access windows corresponding to a same user group are represented as a random access window group, after obtaining the first information, the first terminal device may first determine, based on the position information, the traffic feature, and the like of the first terminal device, a user group to which the first terminal device belongs, then determine, based on an association relationship between the user group and the random access window group, a random access window group that can be used by the first terminal device, so that the first terminal device may determine, based on the identifier of the first terminal device, an index of the first random access window in the random access window group for initiating random access, determine a time domain position of the first random access window based on the time domain position information of the random access window, and initiate random access on the random access resource in the first random access window. In this case, $W_{num}$ is a quantity of random access windows in the random access window group.

Based on the communication method shown in FIG. 5, users are grouped based on different random access conditions (such as a position and a traffic type), a random access resource used by each user group is configured by using the random access window, the user group is associated with the random access window, and terminal devices in different user groups use random access resources in different random access windows. In this way, when a random access request of a user is overloaded or may be overloaded, random access collision can be reduced, thereby improving random access efficiency and reliability.

In addition, for example, FIG. 8 is a schematic flowchart of another communication method according to an embodiment of this application. As shown in FIG. 8, the communication method includes the following steps.

S801: An access network device generates third information.

In this embodiment of this application, the third information includes configuration information of one or more user groups and configuration information of a first signal corresponding to each user group. The configuration information of the user group indicates a grouping condition or a grouping threshold for a terminal device in the user group. The configuration information of the user group may include at least one of the following: area information that needs to be met by the terminal device in the user group, a traffic type that needs to be met by the terminal device in the user group, a data packet size that needs to be met by the terminal device in the user group, or a data arrival probability that needs to be met by the terminal device in the user group. For specific descriptions of the configuration information of the user group, refer to related descriptions of the user grouping information corresponding to the random access window. Details are not described herein again.

The configuration information of the first signal corresponding to the user group indicates the first signal that the terminal device in the user group needs to listen (listen) to, and the first signal is used by the terminal device in the user group to determine a to-be-used random access resource. In this embodiment of this application, the first signal may be a signal including a ZC (Zadoff-Chu) sequence, an m sequence, and another sequence. Different user groups correspond to different first signals, and the first signals corresponding to the different user groups are orthogonal to each other. In other words, the first signals corresponding to the different user groups may be obtained by performing orthogonal transform on a same signal.

In this scenario, the random access resource used by the terminal device in the user group may be an RO mapped (or associated) based on an SSB (an SSB-RO mapping relationship) in an existing design solution. For how to configure the RO to which the SSB is mapped, refer to related descriptions in the existing implementation solution. Details are not described herein again. In this case, time-domain resources occupied by the RO mapped based on the SSB may be considered as a plurality of discrete time-domain resources. Therefore, the RO mapped based on the SSB may be considered as a random access window including the discrete resources.

S802: The access network device sends the third information to a first terminal device. Correspondingly, the first terminal device receives the third information from the access network device.

In this embodiment of this application, the access network device may broadcast the third information to a terminal device in a coverage area of the access network device.

In a possible design solution, the configuration information of the user group and the configuration information of the first signal corresponding to the user group that are in the third information may alternatively be separately sent, for example, carried in different messages or signaling for sending.

S803: The first terminal device determines, based on the third information, a first signal corresponding to a first user group.

The first user group is a user group to which the first terminal device belongs. In this embodiment of this application, after obtaining the third information, the first terminal device may determine, based on position information, a traffic feature, and the like of the first terminal device, a user group to which the first terminal device belongs, that is, the first user group, to determine, based on the user group to which the first terminal device belongs, a corresponding first signal, that is, the first signal corresponding to the first user group.

For example, configuration information corresponding to a user group 1 includes that a terminal device in the user group 1 needs to be located in a first area, a size of a sent data packet ranges from 0 bits to 20 bits, and a data arrival probability ranges from 50% to 70%. Therefore, after obtaining the third information, the first terminal device matches information such as the position information and the traffic feature of the first terminal device with the configuration information of the user group 1 in the third information. If the information matches, it is determined that the first terminal device belongs to the user group 1, to determine the first signal corresponding to the user group 1.

Further, the first terminal device may listen to a first signal sent by the access network device, and determine whether the currently received first signal is the first signal corresponding to the first user group. For details, refer to the following related descriptions in S804.

S804: The access network device sends a second signal on a resource after a first SSB. Correspondingly, the first terminal device receives the second signal on the resource after the first SSB.

The second signal is one of first signals corresponding to the one or more user groups.

In this embodiment of this application, after notifying, the terminal device in the coverage area of the access network device, of the configuration information of the user group and the configuration information of each user group, the access network device may respectively send, on resources after SSBs that are sent, first signals (that is, second signals) corresponding to different user groups, so that a terminal device in a corresponding user group can determine, based on a received signal, whether a random access resource to which a current SSB is mapped can be used.

The first terminal device is used as an example. When the second signal is the first signal corresponding to the first user group, the first terminal device may initiate random access on a random access resource to which the first SSB is mapped. When the second signal is not the first signal corresponding to the first user group, the first terminal device continues to listen to the second signal until the second signal obtained through listening is the first signal corresponding to a user group (that is, the first user group) to which the first terminal device belongs.

For example, FIG. 9 is a diagram of a scenario of performing random access based on a first signal according to an embodiment of this application. A signal 1 is a first signal corresponding to a user group 1, a signal 2 is a first signal corresponding to a user group 2, and a random access resource is an RO to which an SSB is mapped. Based on this, the first signal delivered by the access network device on a configuration resource after an SSB 1 is the signal 1. After listening to the signal 1, a terminal device in the user group 1 may initiate random access on an RO associated with the SSB 1. Because the first signal that a terminal device in the user group 2 listens to is not a first signal corresponding to a user group to which the terminal device belongs, the terminal device continues to listen to the first signal sent by the access network device. For example, if the terminal device in the user group 2 listens to the signal 2 on a configuration resource after an SSB 2, the terminal device in the user group 2 may initiate random access on an RO associated with the SSB 2.

In this way, the access network device configures one first signal for each user group, and the sent first signal is associated with a random access resource (RO) to which a currently received SSB is mapped, so that a terminal device in a corresponding user group can listen to the first signal, and determine whether the random access resource to which the currently received SSB is mapped is a random access resource used by the user group to which the terminal device belongs, to initiate random access.

It may be understood that, in the foregoing embodiments, the method and/or the steps implemented by the access network device may alternatively be implemented by a component (for example, a processor, a chip, a chip system, a circuit, a logical module, or software) that can be used in the access network device. The method and/or the steps implemented by the terminal device may alternatively be implemented by a component (for example, a processor, a chip, a chip system, a circuit, a logical module, or software) that can be used in the terminal device.

The foregoing mainly describes the solutions provided in this application. Correspondingly, this application further provides a communication apparatus. The communication apparatus is configured to implement various methods in the foregoing method embodiments. The communication apparatus may be the access network device in the foregoing method embodiments, or an apparatus including the access network device, or a component that can be used in the access network device, for example, a chip or a chip system. Alternatively, the communication apparatus may be the terminal device in the foregoing method embodiments, or an apparatus including the terminal device, or a component that can be used in the terminal device, for example, a chip or a chip system.

It may be understood that, to implement the foregoing functions, the communication apparatus includes a corresponding hardware structure and/or a software module for performing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

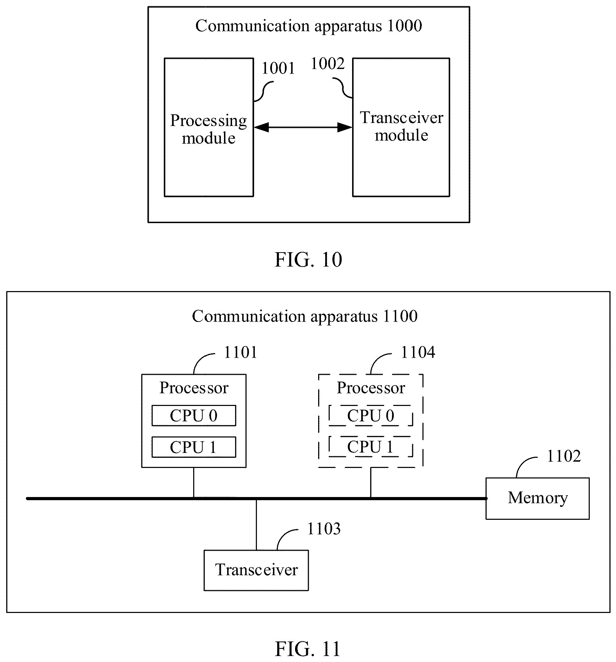

An example in which the communication apparatus is the terminal device or the access network device in the foregoing method embodiments is used. FIG. 10 is a diagram of a structure of a communication apparatus according to an embodiment of this application. As shown in FIG. 10, the communication apparatus 1000 includes a processing module 1001 and a transceiver module 1002. The processing module 1001 is configured to perform a processing function of the terminal device or the access network device in the foregoing method embodiments, and the transceiver module 1002 is configured to perform receiving and sending functions of the terminal device or the access network device in the foregoing method embodiments.

All related content of the steps in the foregoing method embodiments may be cited in function descriptions of the corresponding functional modules. Details are not described herein again.

The communication apparatus 1000 provided in this embodiment may perform the foregoing communication method. Therefore, for technical effects that can be achieved by the communication apparatus 1000, refer to the foregoing method embodiments. Details are not described herein again.

Optionally, in this embodiment of this application, the transceiver module 1002 may include a receiving module and a sending module (not shown in FIG. 10). The transceiver module is configured to implement a sending function and a receiving function of the communication apparatus 1000.

Optionally, the communication apparatus 1000 may further include a storage module (not shown in FIG. 10). The storage module stores a program or instructions. When the processing module 1001 executes the program or the instructions, the communication apparatus 1000 may perform a function of the terminal device or the access network device in the communication method shown in FIG. 5 or FIG. 8.

It should be understood that the processing module 1001 in the communication apparatus 1000 may be implemented by a processor or a processor-related circuit component, and may be a processor or a processing unit. The transceiver module 1002 may be implemented by a transceiver or a transceiver-related circuit component, and may be a transceiver or a transceiver unit.

For example, FIG. 11 is a diagram of a structure of another communication apparatus according to an embodiment of this application. The communication apparatus may be a terminal device or an access network device, or a chip (a system) or another part or component that may be disposed in the terminal device or the access network device. As shown in FIG. 11, the communication apparatus 1100 may include a processor 1101. Optionally, the communication apparatus 1100 may further include a memory 1102 and/or a transceiver 1103. The processor 1101 is coupled to the memory 1102 and the transceiver 1103, for example, may be connected through a communication bus.

The following describes components of the communication apparatus 1100 in detail with reference to FIG. 11.

The processor 1101 is a control center of the communication apparatus 1100, and may be one processor, or may be a general term of a plurality of processing elements. For example, the processor 1101 is one or more central processing units (central processing unit, CPU), may be an application-specific integrated circuit (application-specific integrated circuit, ASIC), or is configured as one or more integrated circuits for implementing embodiments of this application, for example, one or more microprocessors (digital signal processor, DSP) or one or more field programmable gate arrays (field programmable gate array, FPGA).

Optionally, the processor 1101 may perform various functions of the communication apparatus 1100 by running or executing a software program stored in the memory 1102 and invoking data stored in the memory 1102.

In a specific implementation, in an embodiment, the processor 1101 may include one or more CPUs, for example, a CPU 0 and a CPU 1 shown in FIG. 11.

In a specific implementation, in an embodiment, the communication apparatus 1100 may alternatively include a plurality of processors, for example, the processor 1101 and a processor 1104 shown in FIG. 11. Each of the processors may be a single-core processor (single-CPU), or may be a multi-core processor (multi-CPU). The processor herein may be one or more devices, circuits, and/or processing cores configured to process data (for example, computer program instructions).

The memory 1102 is configured to store a software program for performing the solutions in this application, and the processor 1101 controls execution of the software program. For a specific implementation, refer to the foregoing method embodiments. Details are not described herein again.

Optionally, the memory 1102 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of instruction or data structure and that can be accessed by a computer. However, this is not limited thereto. The memory 1102 may be integrated with the processor 1101, or may exist independently, and is coupled to the processor 1101 through an interface circuit (not shown in FIG. 11) of the communication apparatus 1100. This is not specifically limited in this embodiment of this application.

The transceiver 1103 is configured to communicate with another communication apparatus. For example, the communication apparatus 1100 is a terminal device, and the transceiver 1103 may be configured to communicate with a network device or communicate with another terminal device. For another example, the communication apparatus 1100 is a network device, and the transceiver 1103 may be configured to communicate with a terminal device or communicate with another network device.

Optionally, the transceiver 1103 may include a receiver and a transmitter (not separately shown in FIG. 11). The receiver is configured to implement a receiving function, and the transmitter is configured to implement a sending function.

Optionally, the transceiver 1103 may be integrated with the processor 1101, or may exist independently, and is coupled to the processor 1101 through an interface circuit (not shown in FIG. 11) of the communication apparatus 1100. This is not specifically limited in this embodiment of this application.

It should be noted that the structure of the communication apparatus 1100 shown in FIG. 11 does not constitute a limitation on the communication apparatus. An actual communication apparatus may include more or fewer components than those shown in the figure, combine some components, or have different component arrangements.

In addition, for technical effects of the communication apparatus 1100, refer to the technical effects of the communication method in the foregoing method embodiments. Details are not described herein again.

An embodiment of this application provides a communication system. The communication system includes the access network device and the first terminal device in the foregoing method embodiments.

An embodiment of this application further provides a computer-readable storage medium. The computer-readable storage medium stores a computer program or instructions. When the computer program or the instructions are executed by a computer, functions of the foregoing method embodiments are implemented.

An embodiment of this application further provides a computer program product. When the computer program product is executed by a computer, functions of the foregoing method embodiments are implemented.

All or some of the foregoing embodiments may be implemented by using software, hardware, firmware, or any combination thereof. When a software program is used to implement embodiments, all or a part of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, like a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

**Claims**

1.    A communication method, wherein the method comprises:

generating, by an access network device, first information, wherein the first information comprises configuration information of one or more random access windows, configuration information of each random access window comprises time domain position information of the random access window and user grouping information corresponding to the random access window, the user grouping information corresponding to the random access window indicates a grouping condition or a grouping threshold for a terminal device that performs random access in the random access window, and the random access window comprises one or more random access resources; and
sending, by the access network device, the first information.

2.    The method according to claim 1, wherein the random access window is a segment of consecutive time-domain resources, and the time domain position information of the random access window comprises at least one of the following: an index of the random access window, a start position of the random access window, a length of the random access window, or a periodicity of the random access window.

3.    The method according to claim 1, wherein the random access window comprises one or more discrete time-domain resources, and the time domain position information of the random access window comprises an index of the random access window, and a start position and duration of each discrete time-domain resource.

4.    The method according to any one of claims 1 to 3, wherein the user grouping information comprises at least one of the following: area information that needs to be met by the terminal device that performs random access in the random access window, a traffic type that needs to be met by the terminal device that performs random access in the random access window, a data packet size that needs to be met by the terminal device that performs random access in the

random access window, or a data arrival probability that needs to be met by the terminal device that performs random access in the random access window.

5. The method according to any one of claims 1 to 4, wherein the method further comprises:
receiving, by the access network device, second information from a first terminal device, wherein the second information comprises at least one of the following: position information of the first terminal device, capability information of the first terminal device, or a traffic feature of the first terminal device, and the second information is for determining the first information.

6. The method according to any one of claims 1 to 5, wherein the method further comprises:
sending, by the access network device, first indication information, wherein the first indication information indicates that the one or more random access windows associated with a first area are activated, the first area meets an overload condition, and the overload condition is a condition for activating the one or more random access windows associated with the first area.

7. The method according to claim 6, wherein the method further comprises:
receiving, by the access network device, second indication information from a core network device, wherein the second indication information indicates that the first area meets the overload condition.

8. The method according to claim 7, wherein the overload condition comprises at least one of the following: a quantity of random access requests of the terminal device in the first area exceeds a random access request threshold, a quantity of terminal devices in an active state in the first area exceeds a first threshold, or a quantity of terminal devices in an idle state in the first area exceeds a second threshold.

9. The method according to any one of claims 6 to 8, wherein the first indication information is carried in downlink control information DCI scrambled by a common radio network temporary identifier RNTI, a handover trigger command, or a conditional handover CHO configuration.

10. A communication method, wherein the method comprises:

receiving, by a first terminal device, first information from an access network device, wherein the first information comprises configuration information of one or more random access windows, configuration information of each random access window comprises time domain position information of the random access window and user grouping information corresponding to the random access window, the user grouping information corresponding to the random access window indicates a grouping condition or a grouping threshold for a terminal device that performs random access in the random access window, and the random access window comprises one or more random access resources; and
initiating, by the first terminal device, random access in a first random access window, wherein the first random access window is determined based on the first information, and the first random access window is one of the one or more random access windows.

11. The method according to claim 10, wherein the random access window is a segment of consecutive time-domain resources, and the time domain position information of the random access window comprises at least one of the following: an index of the random access window, a start position of the random access window, a length of the random access window, or a periodicity of the random access window.

12. The method according to claim 10, wherein the random access window comprises one or more discrete time-domain resources, and the time domain position information of the random access window comprises an index of the random access window, and a start position and duration of each discrete time-domain resource.

13. The method according to any one of claims 10 to 12, wherein the user grouping information comprises at least one of the following: area information that needs to be met by the terminal device that performs random access in the random access window, a traffic type that needs to be met by the terminal device that performs random access in the random access window, a data packet size that needs to be met by the terminal device that performs random access in the random access window, or a data arrival probability that needs to be met by the terminal device that performs random access in the random access window.

14. The method according to any one of claims 10 to 13, wherein the method further comprises:

sending, by the first terminal device, second information to the access network device, wherein the second information comprises at least one of the following: position information of the first terminal device, capability information of the first terminal device, or a traffic feature of the terminal device, and the second information is for determining the first information.

15. The method according to any one of claims 10 to 14, wherein before initiating, by the first terminal device, the random access in the first random access window, the method further comprises:

receiving, by the first terminal device, first indication information from the access network device, wherein the first indication information indicates that the one or more random access windows associated with a first area are activated, the first area meets an overload condition, and the overload condition is a condition for activating the one or more random access windows associated with the first area; and

determining, by the first terminal device based on the first indication information, that the first random access window is one of the one or more activated random access windows associated with the first area.

16. The method according to claim 15, wherein the overload condition comprises at least one of the following: a quantity of random access requests of the terminal device in the first area exceeds a random access request threshold, a quantity of terminal devices in an active state in the first area exceeds a first threshold, or a quantity of terminal devices in an idle state in the first area exceeds a second threshold.

17. The method according to claim 15 or 16, wherein the second indication information is carried in downlink control information DCI scrambled by a common radio network temporary identifier RNTI, a handover trigger command, or a conditional handover CHO configuration.

18. A communication method, wherein the method comprises:

generating, by an access network device, third information, wherein the third information comprises configuration information of one or more user groups and configuration information of a first signal corresponding to each user group, the configuration information of the user group indicates a grouping condition or a grouping threshold for a terminal device in the user group, the configuration information of the first signal corresponding to the user group indicates the first signal that the terminal device in the user group needs to listen to, different user groups correspond to different first signals, the first signals corresponding to the different user groups are orthogonal to each other, and the first signal is used by the terminal device in the user group to determine a to-be-used random access resource; and

sending, by the access network device, the third information.

19. The method according to claim 18, wherein the method further comprises:
sending, by the access network device, a second signal on a resource after a first synchronization signal and physical broadcast channel block SSB, wherein the second signal is one of first signals corresponding to the one or more user groups, and the first SSB is mapped to one or more random access resources.

20. A communication method, wherein the method comprises:

receiving, by a first terminal device, third information from an access network device, wherein the third information comprises configuration information of one or more user groups and configuration information of a first signal corresponding to each user group, the configuration information of the user group indicates a grouping condition or a grouping threshold for a terminal device in the user group, the configuration information of the first signal corresponding to the user group indicates the first signal that the terminal device in the user group needs to listen to, different user groups correspond to different first signals, the first signals corresponding to the different user groups are orthogonal to each other, and the first signal is used by the terminal device in the user group to determine a to-be-used random access resource;

determining, by the first terminal device based on the third information, a first signal corresponding to a first user group, wherein the first user group is a user group to which the first terminal device belongs;

receiving, by the first terminal device, a second signal on a resource after a first synchronization signal and physical broadcast channel block SSB, wherein the second signal is one of first signals corresponding to the one or more user groups; and

when the first terminal device determines that the second signal is the first signal corresponding to the first user group, initiating random access on a random access resource to which the first SSB is mapped.

21. The method according to any one of claims 18 to 20, wherein the configuration information of the user group comprises at least one of the following: area information that needs to be met by the terminal device in the user group, a traffic type that needs to be met by the terminal device in the user group, a data packet size that needs to be met by the terminal device in the user group, or a data arrival probability that needs to be met by the terminal device in the user group.

22. A communication apparatus, wherein the apparatus comprises a processing module and a transceiver module, wherein

the processing module is configured to perform a processing function in the method according to any one of claims 1 to 21; and
the transceiver module is configured to perform receiving and sending functions in the method according to any one of claims 1 to 21.

23. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus; and the processor is configured to implement the method according to any one of claims 1 to 21 by using a logic circuit or by executing code instructions.

24. A communication apparatus, comprising a processor, wherein the processor is configured to execute a computer program, to enable the communication apparatus to perform the communication method according to any one of claims 1 to 21.

25. A chip, wherein the chip comprises a processor, and when the processor executes a computer program or instructions, the method according to any one of claims 1 to 21 is performed.

26. A communication system, comprising an access network device that performs the method according to any one of claims 1 to 9 and a first terminal device that performs the method according to any one of claims 10 to 17; or
an access network device that performs the method according to claim 18 or 19 and a first terminal device that performs the method according to claim 20 or 21.

27. A computer-readable storage medium, wherein the storage medium stores a computer program or instructions, and when the computer program or instructions are executed by a communication apparatus, the method according to any one of claims 1 to 21 is implemented.

28. A computer program product, comprising computer program code, wherein when the computer program code is run on a communication apparatus, the communication apparatus implements the method according to any one of claims 1 to 21.

FIG. 1

FIG. 2

| 10 ms | 10 ms | 10 ms |
|---|---|---|

| SSB0 | SSB1 | SSB2 | SSB3 | SSB4 | SSB5 | SSB6 | SSB7 | | | SSB2 | SSB3 | | SSB7 | | | SSB0 | SSB1 | SSB2 | SSB3 | SSB4 | SSB5 | SSB6 | SSB7 | |

FIG. 3

Access network
device

Terminal
device

Terminal
device

Access network
device

Terrestrial
gateway

UPF network element

DN

AMF
network
element

SMF
network
element

Core network
device

FIG. 4

Access network
device

First terminal
device

S501: Generate first
information

S502: First information

S503: Determine a first
random access window based
on the first information

FIG. 5

Random
access
window 1

Random
access
window 2

Random
access
window K

...

RO

Network coverage

No network coverage

FIG. 6

Network coverage

No network coverage

■ Random access window 1

▨ Random access window 2

⋮

▭ Random access window K

FIG. 7

Access network device

First terminal device

S801: Generate third information

S802: Third information

S803: Determine, based on the third information, a first signal corresponding to a first user group

S804: Second signal

FIG. 8

Signal 1

Signal 2

SSB 1

SSB 2

...

RO associated with the SSB 1

RO associated with the SSB 2

FIG. 9

FIG. 10

FIG. 11

## INTERNATIONAL SEARCH REPORT

| International application No. |
| --- |
| **PCT/CN2024/090687** |

| A. | CLASSIFICATION OF SUBJECT MATTER |
| --- | --- |

H04W72/04(2023.01)i; H04W74/08(2024.01)i

According to International Patent Classification (IPC) or to both national classification and IPC

| B. | FIELDS SEARCHED |
| --- | --- |

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

CNTXT, CNKI, VEN, ENTXT, 3GPP: 分类, 分组, 类型, 群, 随机接入, 用户, 阈值, 条件, 过载, 区域, 业务, Classification, grouping, type, group, random access, user, threshold, condition, overload, area

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 113453341 A (HUAWEI TECHNOLOGIES CO., LTD.) 28 September 2021 (2021-09-28) description, paragraphs 5-16, 123-182, and 293-315, and figures 8-10 | 1-4, 10-13, 22-28 |
| A | CN 108882340 A (SHENZHEN GIONEE COMMUNICATION EQUIPMENT CO., LTD.) 23 November 2018 (2018-11-23) entire document | 1-28 |
| A | CN 114698061 A (SPREADTRUM COMMUNICATIONS (SHANGHAI) CO., LTD.) 01 July 2022 (2022-07-01) entire document | 1-28 |
| A | KR 20220077868 A (ELECTRONICS AND TELECOMMUNICATIONS RESEARCH INSTITUTE) 09 June 2022 (2022-06-09) entire document | 1-28 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 July 2024** | **15 July 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2024/090687** |

| Patent document cited in search report | | | Publication date (day/month/year) | Patent family member(s) | | | Publication date (day/month/year) |
| --- | --- | --- | --- | --- | --- | --- | --- |
| CN | 113453341 | A | 28 September 2021 | None | | | |
| CN | 108882340 | A | 23 November 2018 | WO | 2018209956 | A1 | 22 November 2018 |
| CN | 114698061 | A | 01 July 2022 | None | | | |
| KR | 20220077868 | A | 09 June 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310566459